# EUROPÄISCHE PATENTSCHRIFT

(11) **EP 3 273 164 B1**
(45) Veröffentlichungstag und Bekanntmachung des Hinweises auf die Patenterteilung: **12.05.2021**
(21) Anmeldenummer: 17181849.5
(22) Anmeldetag: 18.07.2017
(51) Int. Cl.: F24C 15/02, A21B 3/02, E05B 17/00, E05C 9/04, E05C 9/18

(54) **GARGERÄT MIT VERRIEGELUNGSVORRICHTUNG**
COOKING DEVICE WITH LOCKING DEVICE
APPAREIL DE CUISSON COMPRENANT UN DISPOSITIF DE VERROUILLAGE

(30) Priorität: 18.07.2016 DE 202016103884 U
(43) Veröffentlichungstag der Anmeldung: 24.01.2018
(73) Patentinhaber: Rational Aktiengesellschaft, 86899 Landsberg am Lech (DE)
(72) Erfinder: Pietrasch, Rinaldo, 42551 Velbert (DE); Strobl, Eva, 86899 Landsberg am Lech (DE); Tils, Thomas, 86899 Landsberg am Lech (DE)
(74) Vertreter: Holzwarth-Rochford, Andreas

(56) Entgegenhaltungen:
- EP-A1- 1 722 166
- DE-A1-102007 009 540

## Beschreibung

Die vorliegende Erfindung betrifft ein Gargerät, umfassend zumindest einen innerhalb zumindest eines Gehäuses angeordneten Innenraum mit zumindest einer mittels zumindest einem Verschlußelement verschließbaren Öffnung, umfassend zumindest eine zumindest ein Verriegelungselement umfassende Verriegelungsvorrichtung, wobei das Verschlußelement mittels des Verriegelungselements zumindest indirekt an dem Gehäuse festlegbar ist und die Verrieglungsvorrichtung zumindest ein Manipulationselement umfasst, das derart mit dem Verriegelungselement in Wirkverbindung steht, dass mittels einer Ausrichtungs- und/oder Positionsveränderung des Manipulationselementes das Verriegelungselement mittels zumindest einer ersten Bewegung aus zumindest einer ersten Stellung in zumindest eine zweite Stellung bewegbar ist und mittels zumindest einer zweiten Bewegung aus der zweiten Stellung in die erste Stellung bewegbar ist.

Gargeräte sind aus dem Stand der Technik in vielfältiger Weise bekannt. So offenbart beispielsweise die DE 10 2004 061 231 B3 eine Türverriegelung für einen Herd. Die Türverriegelung umfasst einen Getriebemotor sowie eine handangetriebene Schaltwelle, um in einer geschlossenen Position einer Herdtür eine Verriegelung der Tür zu erreichen. Insbesondere wird diese Verriegelung eingesetzt, um bei einem Pyrolysereinigungsvorgang ein unbeabsichtigtes Öffnen der Tür zu vermeiden. Um zu verhindern, dass bei einem gewaltsamen Öffnen der Herdtüre eine Zerstörung der Türverriegelung auftritt, wird vorgeschlagen, dass das Verriegelungselement einen Hebel vorsieht, dessen Hebelachse relativ zu einem Verriegelungsgehäuse reversibel ortsveränderlich ist, insbesondere gegen die Kraft eines Blattfederelements auslenkbar ist.

Weiterhin offenbart die DE 689 02 299 T2 einen Backofen mit einem Verschluss. Es wird vorgeschlagen, dass im Bereich einer an einem Ofenkörper angeordneten schwenkbaren Tür ein fest verbundener Haken vorhanden ist. Bei einem Schließen der Tür gelangt der Haken in Eingriff mit einem in dem Ofenkörper angeordneten Riegel. Der Riegel ist sowohl schwenkbar als auch translatorisch gegen die Kraft einer Feder bewegbar gelagert. Bei einem Verschließen der Tür gelangt der Haken der Tür in Kontakt mit dem Riegel, der aufgrund der Ausbildung einer Auslöserampe seitlich ausweicht, insbesondere gedreht wird. Wird die Tür weiter angedrückt, wird der Riegel translatorisch weiterbewegt, bis der Riegel mittels eines Hebels arretiert wird. Aus dieser Verriegelungsstellung erfordert das Öffnen der Tür die Bewegung des Hebels, insbesondere durch Anheben über eine Stange. Dadurch wird der Riegel freigegeben und eine translatorische Bewegung des Riegels wird ermöglicht.

Nachteilig bei diesem Backofen ist jedoch, dass nur ein geringer Anpressdruck der Tür an den Ofenkörper erreicht werden kann. So ist der Anpressdruck ausschließlich durch die Kraft vorgegeben, die ein Benutzer auf die Ofentür ausübt, um den Riegel soweit zu bewegen, dass er mittels des Hackens arretiert wird.

Schließlich offenbart die DE 3 617 321 A1 eine Vorrichtung zum Öffnen und Schließen einer Tür eines heimelektrischen gattungsgemäßen Gargeräts. Es wird vorgeschlagen, dass ein Griff drehbar gelagert ist. Der Griff wird mittels Federn in einer neutralen Position gehalten. Wird der Griff aus dieser neutralen Position ausgelenkt, kommt es zu einer Bewegung einer Kurvenscheibe, mittels der die Drehbewegung des Griffs in eine translatorische Bewegung von Betätigungshebeln umgewandelt wird. Diese translatorische Bewegung der Betätigungshebel wird in eine Drehbewegung von Verriegelungshebeln umgewandelt. Auf diese Weise ist es möglich, dass die Verriegelungshebel in Eingriff mit einem Element im Bereich eines Türrahmens gebracht werden bzw. dieser Eingriff gelöst werden kann. Beispielsweise wird ein Griff aus einer "3-Uhr"-Position, die einer Entriegelung entspricht, in eine "6-Uhr"-Position bewegt, in der eine Verriegelung vorliegt.

Zudem ist es bei den gattungsgemäßen Gargeräten derzeit so, dass Verriegelungselemente beispielsweise federnd gelagert sind und zu jedem Zeitpunkt ausgelenkt werden können. Dies kann dazu führen, dass die Tür eines Gargeräts nur einseitig verriegelt wird, wenn beispielsweise nur ein Verriegelungselement in das entsprechende Eingriffselement eingreift. Die Tür scheint verschlossen, da sich der Betätigungshebel ohne weiteres in die Verrieglungsposition überführen läßt und so für den Benutzer der Eindruck einer vollständigen Verrieglung entsteht. Grund hierfür ist, dass die Stellung der Verriegelungselemente nicht abgefragt wird. Infolgedessen kann das Gargerät über die ISS bzw. Sicherheitsschaltung freigegeben werden, obwohl die Tür nicht ordnungsgemäß verschlossen und verriegelt ist. Beispielsweise kann so eine Mikrowellenquelle aktiviert werden, obwohl aufgrund des nicht vollständig verschlossenen Zustands der Garrumtür nicht sichergestellt ist, dass keine Mikrowellenstrahlung aus dem Garraum austreten kann, was ein Sicherheitsrisiko darstellt.

Auch das gattungsgemäße Gargerät weist jedoch den Nachteil auf, dass ein Anpressdruck der Tür an dem Gehäuse gering ist. Weiterer Stand der Technik ist den Dokumenten DE102007009540A1 und EP1722166A1 zu entnehmen.

Es ist daher Aufgabe der vorliegenden Erfindung, das gattungsgemäße Gargerät derartig weiterzuentwickeln, dass die Nachteile des Stands der Technik überwunden werden, insbesondere ein Anpressdruck einer Tür an einem Gehäuse vergrößert werden kann. Eine weitere Aufgabe der vorliegenden Erfindung ist es, die Aktivierung des Gargeräts nur bei mit dem gewünschten Anpressdruck korrekt geschlossener Tür zu ermöglichen, d.h. wenn alle Verriegelungselemente ordnungsgemäß eingerastet sind.

Dies wird erfindungsgemäß dadurch erreicht, dass das Verriegelungselement bei der ersten Bewegung translatorisch in eine erste Richtung auf das Gehäuse zu und bei der zweiten Bewegung translatorisch in eine der ersten Richtung entgegengesetzte, zweite Richtung bewegbar ist.

Dabei ist besonders bevorzugt, dass der Innenraum zumindest bereichsweise einen Garraum, einen Technikraum, einen Lüfterraum und/oder Tiegel umfasst, das Verschlusselement zumindest eine Tür, insbesondere Garraumtür, zumindest eine Klappe und/oder zumindest eine Garraumtür umfasst und/oder die Öffnung zumindest bereichsweise eine Beschickungsöffnung und/oder Revisionsöffnung umfasst.

Auch wird mit der Erfindung vorgeschlagen, dass die Verriegelungsvorrichtung zumindest bereichsweise von dem Verschlusselement umfasst ist.

Besonders bevorzugte Ausführungsformen des Gargeräts sehen vor, dass das Verriegelungselement in Eingriff mit zumindest einem Eingriffselement, wie einem Fangkloben, bringbar ist, insbesondere das Verriegelungselement zumindest einen Türriegel umfasst und/oder das Eingriffselement, insbesondere der Fangkloben, ortsfest relativ zu dem Gehäuse und/oder der Öffnung angeordnet ist.

Weiterhin schlägt die Erfindung vor, dass das Verschlusselement zumindest eine Offenstellung, in der der Innenraum durch die Öffnung zugänglich ist, zumindest eine Anlüftstellung, in der zumindest eine in dem Innenraum befindliche Atmosphäre, insbesondere Garraumatmosphäre zwischen dem Verschlusselement und der Öffnung, insbesondere durch einen Spalt zwischen einerseits zumindest einer Dichtungseinrichtung und andererseits dem Verschlusselement und/oder der Öffnung und/oder zwischen zumindest zwei Dichtungseinrichtungen, entweichen kann, und/oder zumindest eine Geschlossenstellung, in der die Öffnung geschlossen ist, aufweist, insbesondere das Verschlusselement zwischen zumindest zwei unterschiedlichen Stellungen, insbesondere der Offenstellung, der Geschlossenstellung und/oder der Anlüftstellung, bewegbar ist.

Erfindungsgemäß befindet sich das Verriegelungselement in der Geschlossenstellung des Verschlusselements in der ersten Stellung, insbesondere im Eingriff mit dem Eingriffselement, das Verrieglungselement in der Anlüftstellung des Verschlusselementes in der zweiten Stellung befindet, insbesondere im Eingriff mit dem Eingriffselement, bevorzugt befindet sich sich das Verriegelungselement in der Offenstellung außerhalb eines Eingriffs mit dem Eingriffselement.

Die Erfindung schlägt vor, dass das Verriegelungselement in der ersten Stellung einen ersten Abstand zu einer der Öffnung abgewandten ersten Oberfläche des Verschlusselements aufweist und in der zweiten Stellung einen zweiten Abstand zu der ersten Oberfläche aufweist, wobei der zweite Abstand größer als der erste Abstand ist und/oder die erste Richtung und/oder die zweite Richtung parallel zu einer Normalenrichtung der ersten Oberfläche verläuft, insbesondere die erste Richtung in Richtung der Öffnung weist.

Die Erfindung schlägt vor, dass das Manipulationselement mittels zumindest eines Verbindungselements mit dem Verriegelungselement in Wirkverbindung steht, insbesondere mittels des Verbindungselements die Ausrichtungs- und/oder Positionsveränderung auf das Verriegelungselement übertragbar ist, wobei die Ausrichtungs- und/oder Positionsveränderung vorzugsweise eine translatorische und/oder rotatorische Bewegung, insbesondere eine Drehung um eine erste Drehachse umfasst.

Erfindungsgemäß umfasst das Verbindungselement eine Getriebeeinrichtung, eine Zahnstange, ein Gestänge und/oder einen Hebel .

Bei den beiden vorgenannten Ausführungsformen ist besonders bevorzugt, dass das Verbindungselement zumindest ein translatorisch bewegbares Übertragungselement umfasst, wobei mittels einer dritten Bewegung des Übertragungselements in eine, insbesondere senkrecht zu der ersten Richtung verlaufende, dritte Richtung die erste Bewegung des Verriegelungselementes erzeugbar ist und/oder mittels einer vierten Bewegung des Übertragungselementes in eine der dritten Richtung entgegengesetzte vierte Richtung die zweite Bewegung des Verriegelungselementes erzeugbar ist.

Weiterhin schlägt die Erfindung vor, dass das Übertragungselement zumindest bereichsweise eine Zahnstange umfasst, insbesondere zur Übertragung einer rotatorischen Bewegung des Manipulationselements auf das Übertragungselement.

Erfindungsgemäß umfasst das Übertragungselement zumindest eine erste Führungskulisse, insbesondere zumindest eine Führungsbahn, zumindest ein Langloch und/oder zumindest eine Führungsnut, wobei das Verriegelungselement mit zumindest einem in der ersten Führungskulisse geführten ersten Führungszapfen in Wirkverbindung steht, insbesondere mit diesem verbunden ist und/oder diesen umfasst.

Erfindungsgemäß umfasst der erste Führungszapfen zumindest eine in der ersten Führungskulisse geführte Rolle.

Auch ist besonders bevorzugt, dass das Verriegelungselement drehbar um eine senkrecht zu der ersten Richtung und/oder der zweiten Richtung verlaufenden zweite Drehachse gelagert ist, EUI-1201569904v4 vorzugsweise die zweite Drehachse senkrecht zu der dritten Richtung und/oder vierten Richtung verläuft.

Bei der vorgenannten Ausführungsform ist besonders bevorzugt, dass das Verriegelungselement, insbesondere bei einem Übergang aus der Offenstellung in die Anlüftstellung und/oder in der zweiten Stellung aus einer Eingriffsposition, in der sich das Verriegelungselement insbesondere in Eingriff mit dem Eingriffselement befindet, um die zweite Drehachse drehbar auslenkbar ist.

Weiterhin schlägt die Erfindung vor, dass eine Drehung des Verriegelungselements um die zweite Drehachse in der ersten Stellung des Verriegelungselements, insbesondere aus der Eingriffsposition, unterbunden ist, insbesondere mittels zumindest eines, vorzugsweise von dem Übertragungselement zumindest bereichsweise umfassten ersten Anschlags.

Ein erfindungsgemäßes Gargerät kann auch dadurch gekennzeichnet sein, dass das Verrieglungselement mittels des Übertragungselements aus der Eingriffsposition um die zweite Drehachse drehbar ist.

Ferner kann ein erfindungsgemäßes Gargerät gekennzeichnet sein durch zumindest eine Rückstelleinrichtung, mittels der das Verriegelungselement in zumindest eine definierte Drehposition um die zweite Drehachse zwingbar ist.

Besonders bevorzugt weist ein erfindungsgemäßes Gargerät auf zumindest ein Führungselement, wobei das Führungselement ortsfest relativ zu dem Verschlußelement angeordnet ist, das Übertragungselement relativ zu dem Führungselement bewegbar ist, und/oder das Verriegelungselement relativ zu dem Führungselement bewegbar ist.

Bei der vorgenannten Ausführungsform ist besonders bevorzugt, dass das Führungselement zumindest eine zweite Führungskulisse aufweist, wobei insbesondere die zweite Führungskulisse sich im wesentlichen entlang der ersten Richtung und/oder zweiten Richtung erstreckt und/oder das Verriegelungselement, vorzugsweise mittels zumindest eines zweiten, insbesondere sich entlang und/oder parallel zu der zweiten Drehachse erstreckenden Führungszapfens, in der zweiten Führungskulisse geführt ist.

Bei der vorgenannten Ausführungsform ist es zudem besonders bevorzugt, dass die zweite Führungskulisse derartig konturiert ist, dass das Verriegelungselement im wesentlichen frei drehbar um die zweite Drehachse ist, wenn der zweite Führungszapfen zumindest bereichsweise in zumindest einem ersten Abschnitt der zweiten Führungskulisse angeordnet ist und/oder eine Drehung des Verriegelungselementes um die zweite Drehachse, insbesondere aus der Eingriffsposition, zumindest bereichsweise begrenzt ist, insbesondere im wesentlichen unterbunden ist, wenn der zweite Führungszapfen zumindest bereichsweise in zumindest einem zweiten Abschnitt der zweiten Führungskulisse angeordnet ist.

Bei der vorgenannten Ausführungsform ist es auch besonders bevorzugt, dass der zweite Führungszapfen zumindest bereichsweise in dem ersten Abschnitt angeordnet ist, wenn sich das Verriegelungselement in der zweiten Stellung und/oder außerhalb der Eingriffsposition befindet, und/oder der zweite Führungszapfen zumindest bereichsweise in dem zweiten Abschnitt angeordnet ist, wenn sich das Verriegelungselement in der ersten Stellung und/oder der Eingriffsposition befindet.

Die beiden vorgenannten Ausführungsformen können auch dadurch gekennzeichnet sein, dass der zweite Führungszapfen eine derartige Umfangsform aufweist, dass bei zumindest bereichsweiser Anordnung des zweiten Führungszapfens in dem zweiten Abschnitt und Drehung des Verrieglungselementes um die zweite Drehachse zumindest ein Bereich der Oberfläche des zweiten Führungszapfens in Kontakt mit zumindest einem Bereich zumindest einer inneren Oberfläche der zweiten Führungskulisse gelangt und/oder die zweite Führungskulisse im ersten Abschnitt eine größere lichte Weite als im zweiten Abschnitt aufweist.

Weiterhin schlägt die Erfindung vor, zumindest eine zumindest bereichsweise von der Verriegelungsvorrichtung umfasste und/oder mit der Verrieglungsvorrichtung in Wirkverbindung stehende Schalteinrichtung, wobei mittels der Schalteinrichtung die Energiezufuhr zu zumindest einem hydraulischen, pneumatischen und/oder elektrischen Verbraucher des Gargeräts schaltbar ist.

Bei der vorgenannten Ausführungsform ist besonders bevorzugt, dass mittels der Schalteinrichtung die Energiezufuhr in Abhängigkeit von der Stellung des Verschlusselementes, insbesondere der Offenstellung, der Anlüftstellung und/oder der Geschlossenstellung, der Stellung des Verriegelungselementes, insbesondere der ersten Stellung und/oder der zweiten Stellung, der Position des Verbindungselementes, der Position des Manipulationselementes, der Position des Übertragungselements erfolgt, wobei vorzugsweise eine Energiezufuhr, insbesondere ausschließlich, in der Geschlossenstellung des Verschlusselements freigebbar ist.

Die beiden vorgenannten Ausführungsformen können auch dadurch gekennzeichnet sein, dass die Schalteinrichtung ein elektrisches, magnetisches, elektromagnetisches, mechanisches, pneumatisches, hydraulisches und/oder berühungsloses Wirkprinzip aufweist und/oder die Schalteinrichtung zumindest ein mit dem Manipulationselement, dem Verbindungselement, dem Verrieglungselement, dem Verschlusselement, dem Eingriffselement, dem Übertragungselement und/oder der Getriebeeinrichtung in Wirkverbindung stehendes Schaltelement, wie zumindest einen Magneten und/oder zumindest einen Reed-Schalter, umfasst.

Mit der Erfindung wird auch vorgeschlagen, dass das Schaltelement mitnahmesicher mit dem Manipulationselement, dem Verbindungselement, dem Verrieglungselement, dem Verschlusselement, dem Eingriffselement, dem Übertragungselement und/oder der Getriebeeinrichtung verbunden ist.

Weiterhin kann ein erfindungsgemäßes Gargerät dadurch gekennzeichnet sein, dass die Verriegelungsvorrichtung zumindest zwei, vorzugsweise eine Vielzahl von Verbindungselementen, Verriegelungselementen, Eingriffselementen, Führungselementen, Schalteinrichtungen, Übertragungselementen und/oder Getriebeeinrichtungen umfasst.

Auch schlägt die Erfindung vor, dass das Verriegelungselement über zumindest eine Fallenrampe und/oder über die zweite Führungskulisse derartig mit dem Verbindungselement wechselwirkt, dass eine Bewegung des Verbindungselementes und/oder Übertragungselementes in die vierte Richtung und/oder eine Bewegung des Verriegelungselementes in die zweite Richtung begrenzt ist bzw. sind wenn sich das Verriegelungselement außerhalb zumindest einer ersten Drehposition um die zweite Drehachse (B) befindet.

Bei der vorgenannten Ausführungsform ist besonders bevorzugt, dass die erste Drehposition der Geschlossenstellung des Verschlusselementes und/oder der Eingriffsposition des Verriegelungselementes in das Eingriffselement entspricht.

Die beiden vorgenannten Ausführungsformen können auch dadurch gekennzeichnet sein, dass die Fallenrampe von dem Verbindungselement und/oder dem Übertragungselement umfasst ist und/oder mit dem Verbindungselement, dem Übertragungselement und/oder dem Manipulationselement in Wirkverbindung steht, wobei die Wirkverbindung mit dem Manipulationselement, insbesondere zumindest mittels des Verbindungselementes, des Übertragungselementes und/oder der Getriebeeinrichtung hergestellt ist.

Auch kann erfindungsgemäß das Gargerät dadurch gekennzeichnet sein, dass die Fallenrampe zumindest einen zweiten Anschlag umfasst, wobei das Verriegelungselement zumindest bereichsweise in Kontakt mit dem zweiten Anschlag gelangt, wenn das Verriegelungselement sich außerhalb der ersten Drehposition befindet, insbesondere wenn das Verbindungselement und/oder das Führungselement in die vierte Richtung bewegt wird.

Schließlich kann ein erfindungsgemäßes Gargerät dadurch gekennzeichnet sein, dass das Verriegelungselement zumindest einen dritten Anschlag aufweist, wobei der dritte Anschlag vorzugsweise mit dem zweiten Anschlag wechselwirkt, wenn sich das Verriegelungselement außerhalb der ersten Drehposition befindet und/oder mittels des dritte Anschlags, insbesondere in der ersten Stellung des Verrieglungselementes und/oder der ersten Drehposition des Verriegelungselementes, eine Drehung des Verriegelungselementes aus der ersten Drehposition begrenzbar, vorzugsweise im wesentlichen vollständig unterbindbar, ist, vorzugsweise in dem der dritte Anschlag mit zumindest einer Innenkontur der Fallenrampe in Kontakt gelangt.

Der Erfindung liegt somit die überraschende Erkenntnis zugrunde, dass dadurch, dass eine Ausrichtungs- und/oder Positionsveränderung eines Manipulationselements, insbesondere eines Türgriffs, in eine translatorische Bewegung des Verriegelungselements senkrecht zu einer Normalenrichtung des Verschlusselements, insbesondere der Garraumtür, umgewandelt wird, es ermöglicht wird, den Anpressdruck dadurch zu erhöhen, dass bei einer Überführung des Verschlusselements aus der Anlüft- in eine Geschlossenposition mittels einer Veränderung der Ausrichtung bzw. Position der Manipulationselemente durch die translatorische Bewegung des Verriegelungselements die Tür an den Türrahmen bzw. das Gehäuse herangezogen werden kann. Durch eine geeignete Auswahl von entsprechenden Verbindungselementen können dabei Hebelkräfte ausgenutzt werden, um einen höheren Anpressdruck der Tür zu erreichen im Vergleich zu einem lediglich direkten Andrücken der Tür. Hierbei ist es insbesondere vorteilhaft, wenn das Manipulationselement als auch die Verriegelungsvorrichtung zumindest bereichsweise in dem Verschlusselement, insbesondere der Garraumtür angeordnet sind. Die erfindungsgemäße Vorrichtung kann sowohl zum Verriegeln einer Garraumtür als auch anderer Verschlusselemente eines Gargeräts, wie beispielsweise Revisionsklappen im Bereich eines Technikraums oder Lüfterraums eingesetzt werden. Die Anordnung der Verriegelungsvorrichtung in dem Verschlusselement bietet insbesondere den Vorteil, dass das Gegenstück in Form des Eingriffelements einen konstruktiv einfachen Aufbau aufweisen kann, insbesondere Defekte an der Verriegelungsvorrichtung einfach dadurch repariert werden können, indem das Verschlusselement samt Verriegelungsvorrichtung ausgetauscht wird. Hierdurch werden Standzeiten des Gargeräts deutlich reduziert.

Aufgrund der nachfolgend beschriebenen Bewegbarkeit des Verriegelungselements ermöglicht die Verriegelungsvorrichtung die Ausbildung einer Offenstellung, Anlüftstellung und Geschlossenstellung des Verschlusselements. Insbesondere die Anlüftstellung ermöglicht es, dass ein kontrolliertes Entweichen von Atmosphäre aus dem Innenraum in die Umgebung erreicht werden kann, ohne einen Benutzer zu gefährden. So befindet sich in der Anlüftstellung das Verriegelungselement im Eingriff mit dem Eingriffselement, so dass ein weiteres Öffnen des Verschlusselements, insbesondere aufgrund eines in dem Innenraum herrschenden Überdrucks, verhindert wird. Erst nach weiterer Bewegung des Manipulationselements, insbesondere Türgriffs, wird der Eingriff zwischen Verriegelungselement und Eingriffselement gelöst und das Verschlusselement, insbesondere die Garraumtür, kann in die Offenstellung überführt werden.

Der Grad der Öffnung des Verschlusselements aus der Geschlossenstellung in die Anlüftstellung wird insbesondere durch die Stellung des Verriegelungselements bestimmt. Insbesondere wird das Verriegelungselement in eine Normalenrichtung der Oberfläche des Verschlusselements translatorisch bewegt. In der Geschlossenstellung nimmt das Verrieglungselement eine derartige Position ein, dass das Verschlusselement gegen den Rahmen der Öffnung gedrückt bzw. gezogen wird. Wird das Verriegelungselement aus dieser Position heraus bewegt, insbesondere in eine Richtung von dem Verschlusselement weg, ergibt sich ein Abstand zwischen dem Verschlusselement und dem Rahmen der Öffnung, so dass der Spalt entsteht. Durch diese Bewegung drückt sich das Verschlusselement mit Hilfe des Verriegelungselements von dem Eingriffselement ab, ohne dass jedoch eine Verbindung zwischen Verriegelungselement und Eingriffselement gelöst wird.

Erfindungsgemäß erfolgt eine Bewegung der Übertragung des Manipulationselements auf das Verriegelungselement durch ein Verbindungselement. Beispielsweise kann das Verbindungselement eine Zahnstange umfassen, so dass eine Rotationsbewegung des Manipulationselements in eine translatorische Bewegung des Verbindungselements übertragen wird. Alternativ sind jedoch auch andere Verbindungselemente, wie Getriebe, Stangen, Hebel oder dergleichen vorstellbar.

Erfindungsgemäß handelt es sich bei dem Verbindungselement um ein zumindest bereichsweise translatorisch bewegbares Element. Mittels einer translatorischen Bewegung wird es dann ermöglicht, diese Bewegung auf eine translatorische Bewegung des Verriegelungselements zu übertragen. Dies kann über ein weiteres Getriebe oder Gestänge erfolgen, vorzugsweise erfolgt dies jedoch durch die Ausbildung einer Führungskulisse in dem Verbindungselement. Die Führungskulisse weist eine derartige Kontur auf, dass die translatorische Bewegung des Verbindungselements, die insbesondere vorzugsweise parallel zu der Öffnung, die mittels des Verschlusselements bedeckt wird, verläuft, in eine translatorische Bewegung des Verriegelungselements in eine Richtung senkrecht hierzu übertragen wird.

Die Ausbildung einer derartigen Führungskulisse bietet ferner den Vorteil, dass bei Erreichen einer Position, in der das Verriegelungselement das Verschlusselement in die Anlüftstellung überführt, eine weitere Bewegung dazu führt, dass eine Rotationsbewegung des Verriegelungselements ausgeführt wird, um einen Eingriff in das Eingriffselement zu lösen. Beispielsweise kann bei Erreichen der Anlüftstellung das Verriegelungselement mit einem Endanschlag der Führungskulisse in Kontakt gelangen, so dass eine weitere translatorische Bewegung des Verbindungselements zu einer rotatorischen Bewegung des Verriegelungselements führt.

Hierzu ist besonders vorgesehen, dass das Verriegelungselement einen Führungszapfen aufweist, der in die Führungskulisse des Verbindungselements eingreift. Darüber hinaus bietet die Verwendung der Führungskulisse den Vorteil, dass, wenn sich das Verriegelungselement in der der Geschlossenposition des Verschlusselements entsprechenden Position befindet, dieses Verriegelungselement derartig an einem ersten Anschlag anliegt, dass eine Rotationsbewegung des Verriegelungselements verhindert wird. Dadurch wird verhindert, dass sich das Verriegelungselement aus seinem Eingriff in einem Eingriffselement löst, während sich das Verschlusselement in der Geschlossenposition befindet.

Gleichzeitig ermöglicht es die Führungskulisse, dass wenn sich das Verriegelungselement in der der Anlüftstellung des Verschlusselements entsprechenden Position befindet, das Verriegelungselement eine Drehbewegung ausführen kann. Dies ermöglicht es, dass das Verriegelungselement, wenn sich das Verschlusselement in der Offenposition befindet und in die Anlüftstellung überführt wird, ausgelenkt werden kann, um Eingriff in einem Eingriffselement zu finden. Somit wird ein Zuschlagen der Tür bzw. des Verschlusselements ermöglicht, ohne dass eine Beschädigung der Verriegelungsvorrichtung bzw. dessen Elementen zu befürchten ist.

Um die zuvor beschriebenen Bewegungen des Verriegelungselements sicherzustellen ist bevorzugt, dass das Verriegelungselement mittels eines zweiten Führungszapfens in einem Führungselement, vorzugsweise einer zweiten Führungskulisse, geführt wird. Dieses Führungselement gibt im Wesentlichen die erste und zweite Richtung vor, indem das Verriegelungselement vorzugsweise in einer zweiten Führungsbahn in dem Führungselement geführt wird, vorzugsweise in einem Langloch. Da das Verbindungselement relativ zu dem Führungselement bewegbar ist, kann durch die Bewegung des Verbindungselements die Bewegung des Verriegelungselements in die erste und zweite Richtung realisiert werden und gleichzeitig, wenn eine Drehbewegung des Verriegelungselements relativ zu dem Führungselement ermöglicht wird, die Auslenkung des Verriegelungselements sichergestellt werden.

Des Weiteren liegt der Erfindung auch die überraschende Erkenntnis zu Grunde, dass das Gargerät, insbesondere die Verriegelungsvorrichtung derartig ausgestaltet werden kann, dass ein Schließen und Verriegeln des Verschlusselements und damit eine Aktivierung des Gargeräts nur möglich ist, wenn alle Verriegelungselemente vollständig in die Eingriffselemente eingreifen. Dies ist insbesondere der Fall, wenn die Verriegelungselemente sich in einer ersten Drehposition befinden, beispielsweise im 90° Winkel zur Oberfläche der Garraumtür, also parallel zu der Normalenrichtung N stehen. Dies kann erreicht werden, indem eine vollständige Bewegung der Verriegelungsvorrichtung in eine Verriegelungsposition mechanisch blockiert bzw. verhindert wird, falls sich Verriegelungselemente nicht in der Eingriffsposition befinden. Mit anderen Worten wird eine Verrieglung der Verrieglungsvorrichtung verhindert bzw. gesperrt wenn zumindest ein Verriegelungselement nicht vollständig in die Eingriffseinrichtung eingreift, insbesondere das Verriegelungselement sich ausserhalb der ersten Drehposition befindet. Insbesondere wird eine Bewegung des Manipulationselementes in eine Position, die der Geschlossenposition des Verschlusselementes, insbesondere der Garrumtür entspricht, nur dann ermöglicht, wenn sich die Verriegelungselemente wirklich in der Eingriffsposition befinden und das Verschlusselement sich in der Geschlossenposition befindet, insbesondere vollständig an dem Rand der Garrumöffnung anliegt.

Beispielsweise kann die oben beschriebene zweite Führungskulisse derart kontuiert sein, dass eine im wesentlichen vollständige Bewegung des Verbindungselements und/oder Übertragungselementes nur möglich ist, wenn das Verriegelungselement in das Eingriffselement eingreift. Greift das Verriegelungselement aber nicht vollständig in das Eingriffselement ein, verhindert die Kontuierung der zweiten Führungskulisse die Bewegung des Verbindungselementes und/oder Übertragungselementes, indem die Oberfläche des zweitens Führungszapfens des Verriegelungselements in Kontakt mit zumindest einer inneren Oberfläche der zweiten Führungskulisse gelangt. Dadurch wird verhindert, dass das Verschlusselement geschlossen werden kann, wenn nicht alle Verriegelungselemente in die jeweiligen Eingriffselemente eingreifen.

Alternativ kann dies auch erreicht werden, wenn das Verriegelungselement über zumindest eine Fallenrampe und/oder über die zweite Führungskulisse mit dem Verbindungselement und/oder Übertragungselementes wechselwirkt, d.h. die Bewegung des Verbindungselementes und/oder Übertragungselements begrenzt ist, wenn sich das Verriegelungselement außerhalb einer ersten Drehposition befindet, also nicht in das Eingriffselement eingreift. In diesem Fall kommt es zu einem Kontakt eines zweiten Anschlags der Fallenrampe mit dem Verriegelungselement, wodurch eine weitere Bewegung des Verbindungselementes blockiert wird und ein Verriegeln des Verschlußelementes wird verhindert. Auch ist es möglich, das Verriegelungselement selbst mit einem dritten Anschlag zu versehen, der mit dem zweiten Anschlag der Fallenrampe wechselwirkt, wenn sich das Verriegelungselement außerhalb der ersten Drehposition befindet, d.h. nicht in das Eingriffselement eingreift.

In einer weiteren ergänzenden oder alternativen Ausführungsform der Erfindung kann die Bewegungsrichtung der Fallenrampe durch eine weitere Verbindungsvorrichtung, beispielsweise ein weiteres Getriebe, umgekehrt werden.

Schließlich ermöglicht es der zuvor beschriebene Aufbau der Verriegelungsvorrichtung, dass auf einfache Weise eine Schalteinrichtung zur Steuerung einer Energiezufuhr zu einem Verbraucher des Gargeräts geschaltet werden kann. So ist es beispielsweise möglich, im Bereich des Verriegelungselements, des Verbindungselements, des Manipulationselements aber auch des Eingriffselements oder Übertragungselements ein Element der Schalteinrichtung, wie beispielsweise einen Permanentmagneten, anzuordnen. Mittels eines Reed-Kontakts kann dann die Position des Magneten detektiert werden und so sichergestellt werden, dass eine Energiezufuhr zu dem Verbraucher des Gargeräts nur dann ermöglicht wird, wenn sich das Verschlußelement in einer Geschlossenposition befindet, insbesondere nur, wenn sich das Verriegelungselement in der Position befindet, in der das Verschlußelement an den Öffnungsrahmen herangezogen ist. Verlässt das Verriegelungselement diese Position bzw. wird die Verbindungseinrichtung oder das Manipulationselement aus einer dieser Position des Verriegelungselements entsprechenden Position heraus bewegt, kann die Schalteinrichtung umgehend reagieren und die Energiezufuhr unterbrechen. Somit kann sichergestellt werden, dass die Energiezufuhr bereits dann unterbunden ist, bevor überhaupt das Verschlusselement in die Anlüftstellung überführt werden kann.

Bevorzugt kann die Energiezufuhr zu dem Verbraucher des Gargeräts nur dann ermöglicht werden, wenn alle Verriegelungselemente in die jeweiligen Eingriffselemente eingreifen, da die Verwendung der zuvor genannten Fallenrampe oder die Kontuierung der zweiten Führungskulisse ein Schließen des Verschlußelements und damit ein Schalten der Energiezufuhr nur in diesem Fall möglich machen. Beispielsweise kann bei Verwendung von Magneten, die auf dem Verbindungselement und/oder Übertragungselement sitzen, die Sperrung der Schließung des Verschlußelementes, wie einer Garraumtür, und somit des Manipulationselementes, wie Türgriffs, dazu führen, dass die Magnete nicht in die Nähe von Reed-Kontakten, die insbesondere in der Vorderwand des Gargeräts sitzen, kommen und somit das Gargerät, insbesondere eine Energiezufuhr, wie Mikrowellenquelle nicht freigegeben wird.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1:: eine perspektivische Aufsicht auf ein Verschlusselement eines erfindungsgemäßen Gargeräts in Form einer Garraumtür;
- Figur 2:: eine perspektivische Aufsicht auf eine zweite Ausführung eines Verschlusselements eines erfindungsgemäßen Gargeräts in Form einer Garraumtür;
- Figur 3:: eine schematische Aufsicht auf die einzelne Komponenten einer Verriegelungsvorrichtung eines erfindungsgemäßen Gargeräts;
- Figur 4:: eine weitere Aufsicht auf die Verriegelungsvorrichtung der Figur 3;
- Figur 5:: eine Seitenansicht auf ein Ausschnitt der Verriegelungsvorrichtung aus Richtung X in der Figur 4; und
- Figur 6:: eine perspektivische Aufsicht auf den Ausschnitt der Verriegelungsvorrichtung der Figur 5 aus Richtung Y in der Figur 4.
- Figur 7:: eine schematische Ansicht auf einen Teil einer Verriegelungsvorrichtung gemäß einer weiteren Ausführungsform mit einem Verriegelungselement außerhalb einer ersten Drehposition;
- Figur 8:: eine schematische Aufsicht auf die Verriegelungsvorrichtung der Figur 7 während eines Schließvorganges des Verschlusselementes;
- Figur 9:: eine schematische Aufsicht auf die Verriegelungsvorrichtung der Figuren 7 und 8, in der sich das Verriegelungselement in der Eingriffsposition befindet;
- Figur 10:: eine schematische Aufsicht auf die Verriegelungsvorrichtung der Figuren 7 bis 9 bei Fortführung des Schließvorganges des Verschlußelements;
- Figur 11:: eine schematische Aufsicht auf die Verriegelungsvorrichtung der Figuren 7 bis 10 bei vollständig zugezogenem Verschlußelement;
- Figur 12:: eine schematische Aufsicht auf die Verrieglungsvorrichtung der Figur 7 zur Darstellung der Wechselwirkung der Fallenrampe mit dem Verriegelungselement während des Schließvorganges des Verschlußelementes wenn das Verriegelungselement sich außerhalb der Eingriffsposition befindet;
- Figur 13:: eine schematische Aufsicht auf einen Teil einer Verriegelungsvorrichtung gemäß einer weiteren alternativen Ausführungsform;
- Figur 14:: eine schematische Aufsicht auf ein Führungselement gemäß einer weiteren Ausführungsform, bei der die zweite Führungskulisse konturiert ist;
- Figur 15:: eine schematische Aufsicht auf das Führungselement der Figur 14, wenn sich das Verriegelungselement außerhalb des Eingriffsposition befindet; und
- Figur 16:: eine schematische Aufsicht auf das Führungselement der Figur 14, wenn sich das Verriegelungselement in der Eingriffsposition befindet, nach Beendigung des Schließvorganges des Verschlußelementes.

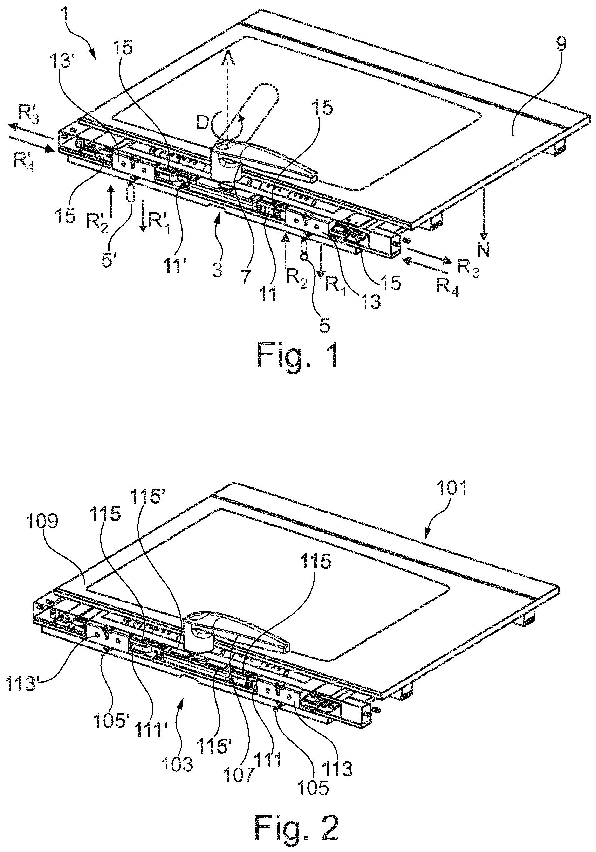

In Figur 1 ist ein Verschlusselement in Form einer Garraumtür 1 eines erfindungsgemäßen Gargeräts dargestellt. Mittels der Garraumtür 1 kann eine nicht dargestellte Öffnung in Form einer Beschickungsöffnung eines ebenfalls nicht dargestellten Garraums des Gargeräts verschlossen werden.

Die Garraumtür 1 weist eine Verriegelungsvorrichtung 3 auf. Die Verriegelungsvorrichtung 3 umfasst Verriegelungselemente 5, 5' sowie ein Manipulationselement in Form eines Türgriffs 7. Wie nachfolgend erläutert, führt eine Positionsveränderung des Türgriffs 7, insbesondere eine Rotation D um eine erste Drehachse A, zu einer translatorischen Bewegung des Verriegelungselements 5 in eine Richtung R₁ bzw. eine Richtung R₂ bzw. des Verriegelungselements 5' in Richtung R₁' bzw. R₂'. Hierbei verlaufen die Richtungen R₁', R₂ und R₂' parallel zu einer Normalenrichtung N der Oberfläche 9 der Garraumtür 1, die der Beschickungsöffnung abgewandt ist.

Wie nachfolgend erläutert, wird diese Bewegung der Verriegelungselemente 5 mittels einer Übertragung der Bewegung des Türgriffs 7 über Verbindungselemente 11, 11' erreicht. Dabei wird eine Drehung des Türgriffs 7 über eine Getriebeeinrichtung 16 in eine translatorische dritte Bewegung der Verbindungselemente 11, 11' in eine dritte Richtung R₃ und R₃' bzw. eine dazu entgegengesetzte vierte Bewegung in eine vierte Richtung R₄ und R₄' übertragen.

In der Figur 1 befinden sich die Verriegelungselemente 5, 5' in einer ersten Position. Wie in der Figur 1 erkennbar, reichen die Verriegelungselemente 5, 5' jeweils in ein Führungselement in Form eines Schloss 13, 13', welches ein Führungselement im Sinne der Erfindung darstellt. Die Verriegelungselemente 5, 5' sind nicht in Richtung R₁ bzw. R₁' ausgelenkt und stehen nur geringfügig aus dem Schloss 13 bzw. 13' hervor. Mit anderen Worten sind die Verriegelungselemente 5, 5' in der Position dargestellt, die der in Figur 1 dargestellten Position des Türgriffs 7 entspricht. Wird hingegen der Türgriff 7 aus der in der Figur 1 voll dargestellten Position durch eine Positions- bzw. Ausrichtungsveränderung in die in Figur 1 strichpunktiert dargestellte Position überführt, bewegen sich die Verriegelungselemente 5, 5' in einer ersten Bewegung entlang der Richtung R₁, R_{1'} in die dargestellte zweite Position. Hierzu werden die Verbindungselemente 11, 11' synchron in Richtung R₃ bzw. R₃' bewegt. Wird der Türgriff dann aus der stichpunktiert dargestellten Position in die ursprüngliche Position überführt, werden die Verbindungselemente 11, 11' synchron in Richtung R₄, R₄' bewegt und die Verriegelungselemente 5, 5' in Richtung R₂ bzw. R₂'. In beiden Positionen befindet sich das Verriegelungselement 5, 5' im Eingriff mit einem am Türrahmen der Beladungsöffnung angeordneten, in Figur 1 nicht dargestellten Eingriffselement.

Aufgrund der Bewegung der Verriegelungselemente 5, 5' wird jedoch ein Spalt zwischen der Garraumtür 7 und dem Rahmen der Garraumöffnung hergestellt, so dass in dem Garraum vorhandene Atmosphäre ausströmen kann. Eine weitergehende Öffnung der Tür wird jedoch dadurch verhindert, dass der Eingriff zwischen den Verriegelungselementen 5, 5' und dem Eingriffselement, wie einem Fangkloben, auch in der in Figur 1 gestrichelt dargestellten Position beibehalten wird.

Wie nachfolgend erläutert, führt erst eine weitere Bewegung des Türgriffs 7, über die strichpunktiert dargestellte Position hinaus, dazu, dass ein Eingriff der Verriegelungselemente 5, 5' mit dem Fangkloben gelöst wird.

Um eine größtmögliche Benutzersicherheit sicherzustellen, ist es essentiell, dass bereits bei Überführung der Verriegelungsvorrichtung 3 aus der Geschlossenposition der Garraumtür 1 in die Anlüftposition der Garraumtür 1 elektrische Verbraucher, wie Dampferzeuger oder Lüftungseinrichtungen des Gargeräts abgeschaltet werden. Ansonsten könnte es dazu kommen, dass dem Benutzer weiterhin heiße Atmosphäre bzw. Wrasen entgegen strömt und es so zu Verbrühungen bzw. Verbrennungen kommen kann.

Um diese frühzeitige Abschaltung zu erreichen, ist vorgesehen, dass mehrere Schalteinrichtungen 15 mit der Verriegelungsvorrichtung 3 in Wirkverbindung stehen. Insbesondere sind Schalteinrichtungen 15 vorgesehen, die in Wirkverbindung mit den Verbindungselementen 11, 11' stehen. Kommt es zu einer Auslenkung der Verbindungselemente 11, 11' in Richtung R₃ bzw. R₃', insbesondere durch Drehung des Türgriffs 7, werden die Schalteinrichtungen 15 betätigt, so dass eine Stromzufuhr zu dem Verbraucher unterbrochen wird. Obwohl es noch nicht zu einer Bewegung der Verriegelungselemente 5, 5' gekommen ist, also die Garraumtür sich weiterhin in einer Geschlossenposition befindet, kann so sichergestellt werden, dass es zu einer frühzeitigen Unterbrechung der Energiezufuhr kommt.

In Figur 2 ist eine alternative Ausführungsform der Garraumtür 1 in Form der Garraumtür 101 dargestellt. Diejenigen Elemente der Garraumtür 101, die denjenigen der Garraumtür 1 entsprechen, tragen die gleichen Bezugszeichen, allerdings um 100 erhöht. Die Garraumtür 101 unterscheidet sich im wesentlichen von der Garraumtür 1 dadurch, dass Schalteinrichtungen 115' nicht mit dem Verbindungselement 111 sondern mit einer Getriebeeinrichtung 116 zwischen Verbindungselement 111 und Türgriff 107 wechselwirken.

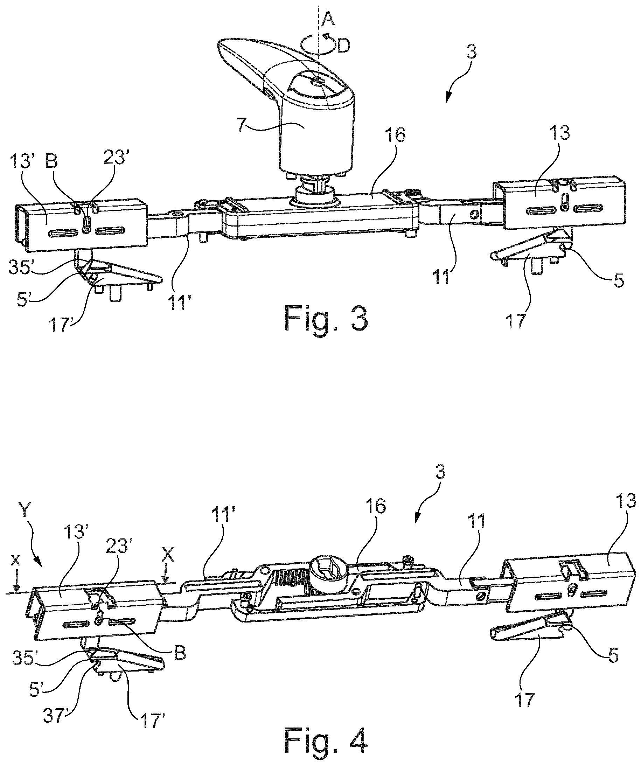

In Figur 3 ist eine perspektivische Aufsicht auf die Verriegelungsvorrichtung 3 der Garraumtüren 1 und 101 dargestellt. In dieser Darstellung befinden sich die Verriegelungselemente 5, 5' zu Anschaulichkeitszwecken in unterschiedlichen Positionen. Das Verriegelungselement 5' ist in der Position dargestellt, die der in Figur 3 dargestellten Position des Türgriffs 7 entspricht. Der Türgriff 7 ist also aus der in Figur 1 dargestellten Position um die Achse A gedreht, in die in Figur 1 strichpunktiert dargestellte Position. Hingegen ist das Verriegelungselement 5 in Figur 3 in der Position dargestellt, die der in Figur 1 dargestellten Position des Türgriffs 7 entspricht. In der Realsituation sind die Positionen der Verriegelungselemente 5, 5' synchron.

In Figur 3 ist neben den Verriegelungselementen 5, 5' auch das jeweilige Eingriffselement in Form von Fangkloben 17, 17' dargestellt. Wie zuvor erläutert, befinden sich sowohl das Verriegelungselement 5 als auch das Verriegelungselement 5' im Eingriff mit dem Fangkloben 17 bzw. 17'. Das Verrieglungselement 5' ist in der Anlüftposition der Garraumtür 1 dargestellt während das Verriegelungselement 5 in der Position, die der Geschlossenstellung der Garraumtür 1 entspricht, dargestellt ist.

In Figur 4 ist eine perspektivische Aufsicht auf die Verriegelungsvorrichtung 3 dargestellt. Dabei ist der Türgriff 7 weggelassen und die Getriebeeinrichtung 16 geöffnet dargestellt. Dabei entspricht die in Figur 4 dargestellte Position des Verbindungselements 11' der Position des Türgriffs 7 in Figur 3 bzw. der strichpunktierten Position in Figur 1 während das Verbindungselement 11 in der Position dargestellt ist, die der Position des Türgriffs in Figur 1 entspricht.

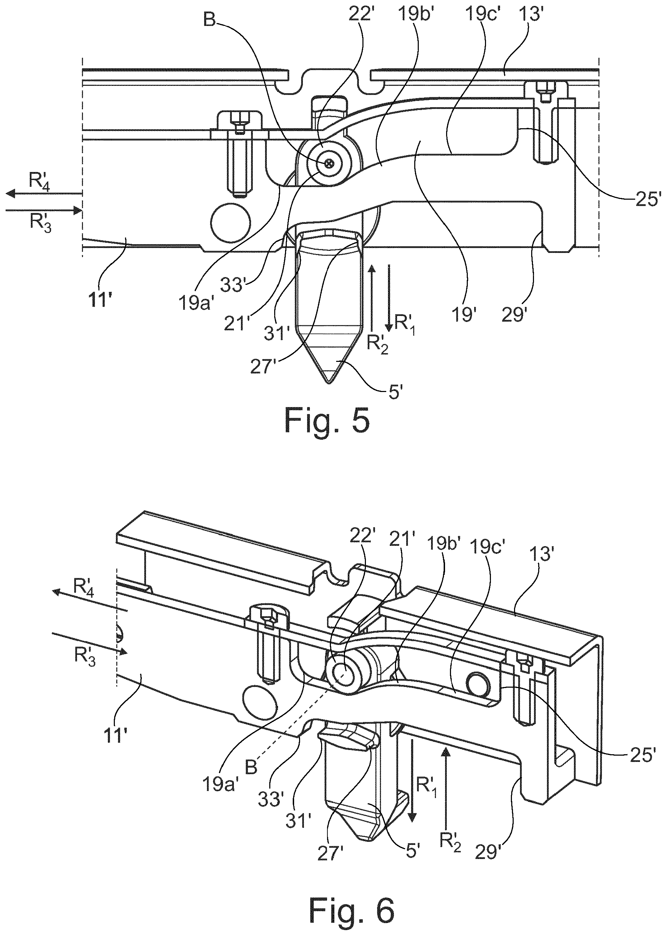

Die Figur 5 ist eine Schnittdarstellung durch das Schloss 13' aus Richtung X in Figur 4 gezeigt. Wie der Figur 5 zu entnehmen ist, weist die Verbindungseinrichtung 11' eine erste Führungskulisse 19' auf. In die Führungskulisse 19' reicht ein, insbesondere eine Rolle 22', umfassender Führungszapfen 21' des Verriegelungselements 5' ein. Das Verriegelungselement 5' ist in einer Position dargestellt, in der das Verriegelungselement 5' in Richtung R₁' ausgelenkt ist.

Wird nun das Verbindungselement 11' in Richtung R₄', also in Figur 5 nach links bewegt, folgt der Führungszapfen 21' der Führungskulisse 19' in dem Sinne, dass er sich und damit auch das Verriegelungselement 5' durch eine zweite Bewegung in Richtung R₂' bewegt. Dazu gleitet der Führungszapfen 21' aus dem Bereich 19a' über den Bereich 19b' in den Bereich 19c'. Um zu verhindern, dass der Führungszapfen 21' und damit das Verriegelungselement 5' in Richtung R₄' bzw. R₃' seitlich bewegt wird, wird ein Widerlager in dem Schloss 13' gebildet. Hierzu weist das Schloss 13', wie in Figur 3 und 4 dargestellt, eine zweite Führungskulisse 23' auf. Die Führungskulisse 23' ist in Form eines Langlochs ausgebildet.

Gelangt der Führungszapfen 21' in Berührung mit dem Ende 25' der Führungskulisse 19', wird der Führungszapfen 21' und damit das Verriegelungselement 5' aus der in Figur 5 dargestellten Position in Richtung R₂' bewegt. Das Verriegelungselement 5' befindet sich dann in einer Position, die der in Figur 3 dargestellten Position des Führungszapfens 5 entspricht. Gleichzeitig liegt das Verriegelungselement 5' im Bereich 27' an einem Anschlag 29' an. Das Verriegelungselement 5' ist ferner um eine zweite Drehachse B drehbar in dem Schloss 13' gelagert. In der Position, wenn der Bereich 27' an dem Anschlag 29' anliegt, ist eine Drehbewegung des Verriegelungselements 5' um eine zweite Achse B entgegen dem Uhrzeigersinn in Figur 5 jedoch unterbunden. Weiterhin ist der Bereich 19c' der Führungskulisse 19' so geformt, dass eine Bewegung des Verbindungselements 11' aus dieser Position in Richtung R₄' zunächst keine Bewegung des Verriegelungselements 5' in Richtung R₁' bewirkt. Damit kann die Schalteinrichtung 15 bereits reagieren, bevor überhaupt eine Bewegung bzw. Öffnung der Garraumtür 1 stattfindet.

Befindet sich das Verriegelungselement 5' jedoch in der in Figur 5 dargestellten Position kann es gegen den Uhrzeigersinn um die Achse B ausgelenkt werden. Über ein nicht dargestelltes Rückstellelement wird das Verriegelungselement 5' aber in die in Figur 5 dargestellte Position um die Achse B gezwungen. Bei einer weiteren Bewegung des Verbindungselements 11' in Richtung R₃' wird dann der Bereich 31' in Anlage zu dem Anschlag 33' kommen. Bei einer darüber hinaus gehenden Bewegung des Verbindungselements 11' die durch eine weitere Drehung des Türgriffs 7 um die Achse A in Richtung D aus der in Figur 3 bzw. strichpunktiert in Figur 1 dargestellten Position hervorgerufen wird, wird das Verriegelungselement 5' um die Drehachse B entgegen dem Uhrzeigersinn in Figur 5 und im Uhrzeigersinn in Figur 3 bzw. 4 ausgelenkt, und so ein Eingriff in den Fangkloben 17' gelöst.

Darüber hinaus kann bei einem Zuschlagen der Garraumtür 1 in der in Figur 5 dargestellten Position das Verriegelungselement 5' ausgelenkt werden und so entlang einer Führungsfläche 35' des Fangkloben 17' entlang gleiten und hinter dem Vorsprung 37' des Fangkloben 17' einschnappen. Wird dann das Verbindungselement 11' in Richtung R₄' bewegt, wird aufgrund der Form der Führungskulisse 19' das Verriegelungselement 5' in Richtung R₂' bewegt und so die Tür an den Türrahmen herangezogen.

In Figur 6 ist eine perspektivische Aufsicht auf das Schloss 13' aus Richtung Y in Figur 3 dargestellt.

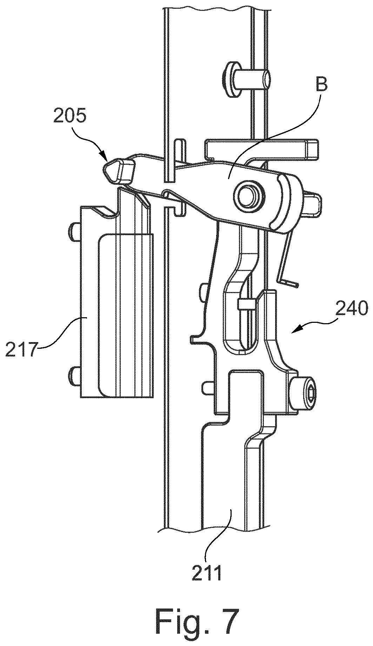

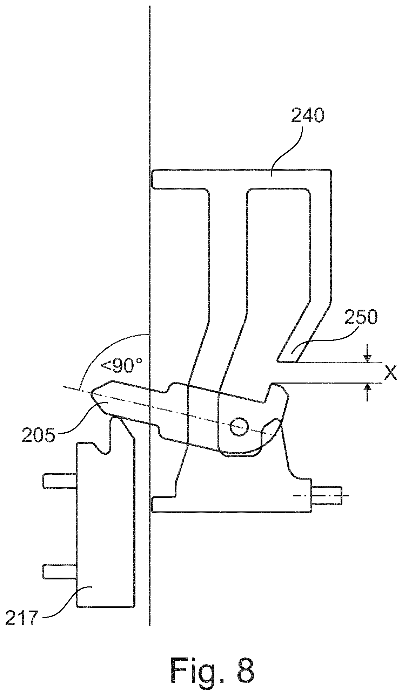

Figur 7 und 8 sind perspektivische Aufsichten auf eine Ausführungsform der Erfindung, die das System aus Verriegelungselement 205, Eingriffselement 217 (in Form eines Fangkloben), Verbindungselement 211 und Fallenrampe 240 zeigen, wobei sich das Verriegelungselement 205 im ausgelenkten Zustand, also ausserhalb der Eingriffsposition bzw. außerhalb der ersten Drehposition um die Achse B befindet. Die Fallenrampe 240 wechselwirkt insbesondere mit dem Verbindungselement 211 bzw. Übertragungselement, ist vorzugsweise mit diesem verbunden oder von diesem umfasst.

In Figur 7 wird das Verschlußelement bzw. die Garraumtür dem Gehäuse bzw. der Rand der Garraumöffnung oder Gerätefront angenähert, wodurch das Verriegelungselement 205 auf das Eingriffselement trifft 217 und durch Rotation um die Drehachse B nach oben ausgelenkt wird.

Das gleiche kann, insbesondere spiegelbildlich, an einem weiteren Verriegelungselement stattfinden.

Aus Figur 8 wird ersichtlich, dass das Verriegelungselement 205 an seiner dem Eingriffselement 217 abgewandten Seite mit einem, insbesondere in Form eines Nasenelementes ausgebildeten, zweiten Anschlag 250 der Fallenrampe 240 wechselwirken kann, im Falle, dass das Verriegelungselement 205 beim Schließvorgang nicht vorschriftsmäßig in das Eingriffselement 217 eingreift, also nicht in die Eingriffsposition übergeht. Das Verriegelungselement 205 ist innerhalb eines vorgegebenen Maß um die Drehachse (B) innerhalb eines Toleranzbereichs x drehbar, ohne dass das Verriegelungselement 205 mit dem zweiten Anschlag 250 der Fallenrampe 240 wechselwirkt. Somit wird also eine Auslenkung des Verriegelungselementes 205 beim Schließen der Verschlußelementes ermöglicht.

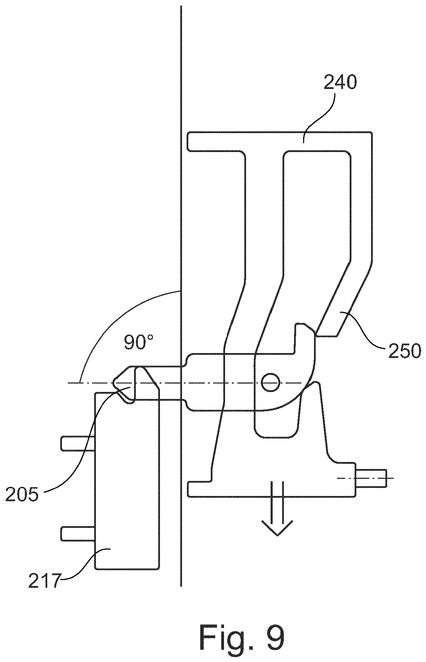

Figur 9 ist eine perspektivische Aufsicht in dem Zustand, bei dem die Garraumtür dem Gargerät genähert wurde, so dass das Verriegelungselement 205 komplett über das Eingriffselement 217 und hinter das Eingriffselement 217 gerutscht ist und vollständig in dieses eingreift. Das Verrieglungselement 205 befindet sich somit in der Eingriffsposition. Dabei befindet sich das Verriegelungselement 205 in einer ersten Drehposition um die Achse B, in der eine Längsachse das Verriegelungselements, die sich radial zur Achse B erstreckt, insbesondere in einem Winkel von 90° zu der Fläche der Verschlußelementes bzw. Garraumtür, also parallel zu der Normalenrichtung N verläuft. Wird nun das Manipulationselement, beispielsweise der Türgriff, in Richtung der Position, die dem vollständigem Verriegeln der Garraumtür 1 entspricht, bewegt (beispielsweise von 3-Uhr in 6-Uhr Stellung), wird die Fallenrampe 240 über das Verbindungselement 211 nach unten (in Figur 9 in Pfeilrichtung) bewegt. In diesem Fall bewegt sich das Verriegelungselement 205 dabei nicht, das es zu keiner Wechselwirkung zwischen dem Verriegelungselement 205 mit dem zweiten Anschlag 250 der Fallenrampe 240 kommt. Gleiches geschieht, insbesondere erneut spiegelbildlich, an den weiteren Verriegelungselementen.

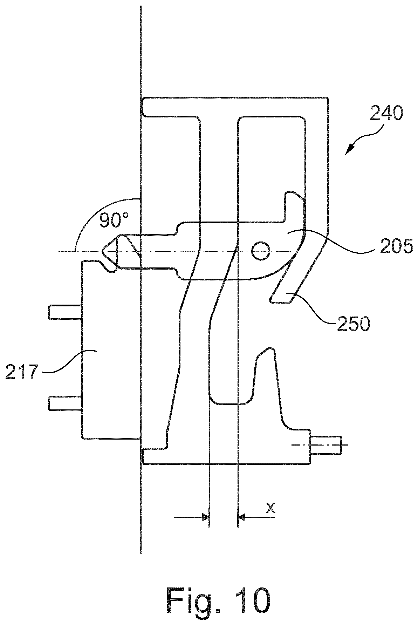

Figur 10 ist eine perspektivische Aufsicht, die zeigt, dass sich die Fallenrampe 240 in Folge der Drehung des Manipulationselements und der damit einhergehenden translatorischen Bewegung des Verbindungselementes 211 bzw. Übertragungselementes weiter, im Vergleich zu Figur 9 weiter nach unten, bewegt hat und dabei den Anziehvorgang der Garraumtür bewirkt und somit den gewünschten Anpressdruck erzeugt. In einer Ausführungsform, bei der sich Magnete der Schalteinrichtung auf dem Verbindungselement 211 befinden, werden dadurch diese Magnete in die Nähe von Reed-Kontakten gebracht und in der Endlage der Fallenrampe 240 bzw. des Verbindungselements 211 die Gargerätefunktion, beispielsweise eine Mikrowellenquelle freigeschaltet.

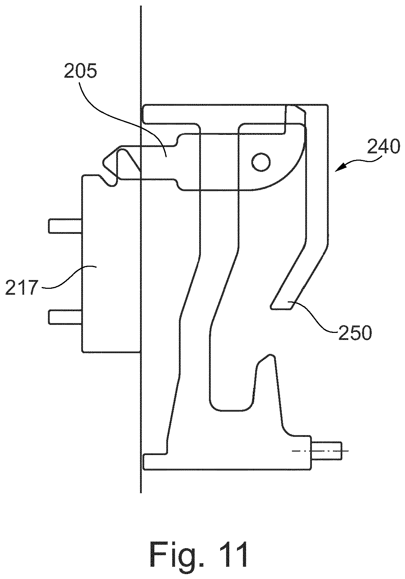

Die vollständig verriegelte Garraumtür ist der perspektivischen Aufsicht der Figur 11 zu entnehmen. Das Manipulationselement ist vollständig ausgelenkt und die Garraumtür ist fest verschlossen. In dieser Ausführungsform kann bei dieser Stellung des Verriegelungselements 205, der Fallenrampe 240 und damit des Verbindungselements 211 die Energiezufuhr des Gargerätes freigegeben werden, indem beispielsweise Magnete, die sich auf dem Verbindungselement 211 befinden, in Wirkverbindung mit einem Reed-Kontakt gebracht sind.

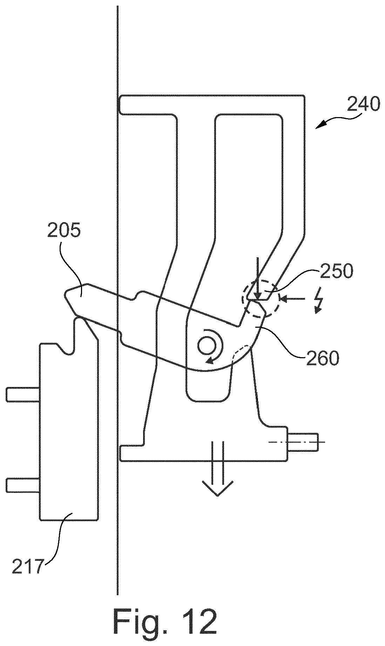

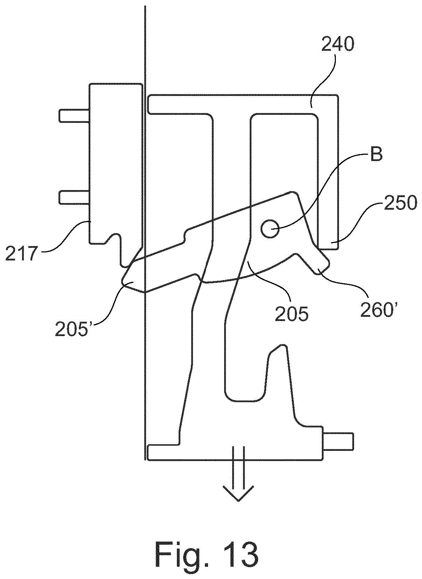

Ein Verhindern der Möglichkeit, die Garraumtür vollständig zu schließen und damit beispielsweise ein Verhindern der Freigabe der Energiezufuhr für das Gargerät, kann den Aufsichten der Figuren 12 und 13 entnommen werden. Da das Verriegelungselement 205 nicht (vollständig) in das Eingriffselement 217 eingreift, kommt es zu einer Wechselwirkung des Verriegelungselements 205 mit dem zweiten Anschlag 250 der Fallenrampe 240 (Figur 12) insbesondere einer Wechselwirkung eines dritten Anschlags 260 an dem Verriegelungselement 205 mit (dem zweiten Aufschlag 250) der Fallenrampe 240, so dass die Fallenrampe 240 nicht weiter in Pfeilrichtung bewegt werden kann und die Garraumtür nicht geschlossen werden kann. In der in Figur 13 dargestellten Ausführungsform ist der dritte Anschlag 260' des Verriegelungselementes 205' aufgrund der Umkehrung des Drehsinns des Verriegelungselementes 205' um die Drehachse B an einer alternativen Stelle angeordnet. Es kann auch vorgesehen sein, dass durch eine zusätzliche Verbindungsvorrichtung, wie einem weiteren Getriebe, der Drehsinn des Verriegelungselementes 205' umgekehrt wird.

Indem also das Verriegeln verhindert wird, wenn sich zumindest ein Verriegelungselement 205, 205' nicht in der Eingriffsposition befindet, wird die weitere Bewegung des Verbindungselementes bzw. Übertragungselementes 211 mechanisch unterbunden, wodurch auch eine weitere Bewegung des Manipulationselementes und somit eine Verriegelung unterbunden wird. Aufgrund der Wechselwirkung der Schalteinrichtung mit dem Übertragungselement, insbesondere die Anordnung der Schaltmagneten auf dem Übertragungselement, wird somit auch wirksam eine Freischaltung des Gargeräts, bzw. von dessen Verbrauchern, wie einer Mikrowellenquelle unterbunden.

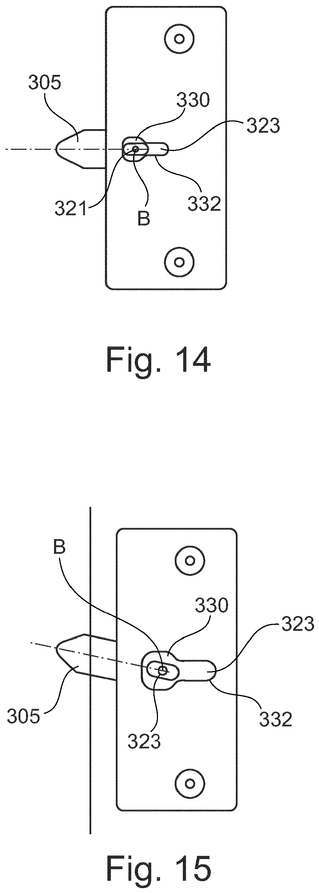

Die Figuren 14-16 zeigen die perspektivischen Aufsichten einer weiteren Ausführungsform der vorliegenden Erfindung, insbesondere eine weitere Ausführungsform eines Führungselementes. In dieser Ausführungsform ist die zweite Führungskulisse 323 kontuiert, so dass in einem ersten Abschnitt 330 das Verriegelungselement 305, das mit einem zweiten Führungszapfen 321 in die Führungskulisse 323 eingreift, frei drehbar um die zweite Drehachse B ist (siehe Vergleich der Figuren 14 und 15). In einem zweiten Abschnitt 332 der zweiten Führungskulisse 323 ist diese Drehbarkeit begrenzt bzw. unterbunden. Insbesondere ist die lichte Weite des ersten Abschnitts 330 größer als diejenige des zweiten Abschnitts 332. Ferner weist der zweite Führungszapfen 321 eine von einer Kreisform abweichende Umfangsform auf, weist insbesondere abgeflachte Bereiche auf. Der zweite Führungszapfen 321 ist in Figur 14 in einer Position dargestellte, in der sich das Verriegelungselement 305 in der ersten Drehposition um die Drehachse B befindet, also beispielsweise die Eingriffsposition einnimmt. In Figur 15 ist der Zustand dargestellt, wenn das Verriegelungselement 305 aus der ersten Drehposition um die Drehachse B aus gelenkt ist.

Würde nun versucht werden, das Verriegelungselement 305, wenn es sich in der in Figur 15 dargestellten Drehposition um die Drehachse B befindet, translatorisch in Figur 15 nach rechts zu bewegen, kann der zweite Führungszapfen 321 nicht in den zweiten Abschnitt 332 eintreten. Dies ist nur in der in Figur 14 dargestellten Position möglich.

Wie anhand der Figuren 3 und 4 erläutert, führt eine Bewegung des Verbindungselementes zu einer Bewegung des zweiten Führungszapfens in der zweiten Führungskulisse. Wird diese Bewegung aber mechanisch unterbunden, wie es in der Figur 15 dargestellt ist, wird auch eine Bewegung des Verbindungselementes und damit des Manipulationselementes unterbunden. Damit kann die Tür nicht in den Verriegelungszustand überführt und auch keine Freigabe von Verbrauchern über die Schalteinrichtung bewirkt werden.

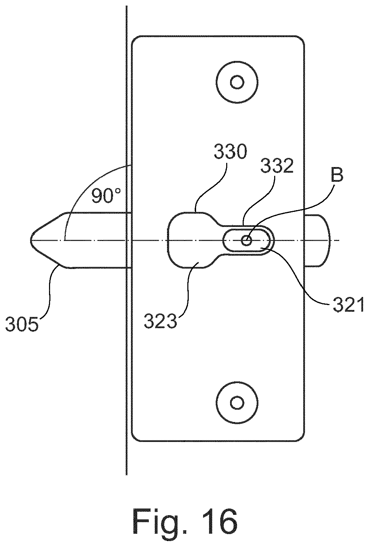

Wie insbesondere in Figur 16 dargestellt ist, kann der zweite Führungszapfen 321 allerdings ungehindert von dem ersten Abschnitt 330 in den zweiten Abschnitt 332 übergehen, falls sich das Verriegelungselement 305 in der ersten Drehposition um die Drehachse B befindet, wie es beispielsweise in der Eingriffsposition der Fall ist. Weiterer Vorteil der Konturierung der zweiten Führungskulisse 323 ist, dass eine Drehbewegung des Verriegelungselementes 305 nicht nur durch den in den Figuren 14 bis 16 nicht dargestellten, zuvor anhand der weiteren Ausführungsformen beschriebenen ersten Anschlag unterbunden wird, sondern auch aufgrund der Formgebung des zweiten Abschnitts 332 der zweiten Führungskulisse 323 und des zweiten Führungszapfens 321 ebenfalls eine Drehung des Verriegelungselements 305 aus der ersten Drehposition, wie sie in Figur 16 dargestellt ist, begrenzt bzw. unterbunden ist, da zumindest ein Bereich der Oberfläche des Führungszapfens 321 in Kontakt mit der inneren Oberfläche der zweiten Führungskulisse 323 gelangt.

Die in der vorstehenden Beschreibung, in den Figuren und in den Ansprüchen beschriebenen Merkmale können sowohl einzeln als auch in beliebiger Kombination wesentlich für die Erfindung in ihren verschiedenen Ausführungsformen sein.

### Bezugszeichenliste

- 1, 101: Garraumtür
- 3, 103: Verriegelungsvorrichtung
- 5, 5', 105, 105', 205, 205', 305: Verriegelungselement
- 7, 107: Türgriff
- 9, 109: Oberfläche
- 11, 11', 111, 111', 211: Verbindungselement
- 13, 13', 113, 113': Schloss
- 15, 115, 115': Schalteinrichtung
- 16, 116: Getriebeeinrichtung
- 17, 17', 217: Fangkloben
- 19': Führungskulisse
- 19a', 19b', 19c': Bereich
- 21', 321: Führungszapfen
- 22': Rolle
- 23', 323: Führungskulisse
- 25': Ende
- 27': Bereich
- 29': Anschlag
- 31': Bereich
- 33': Anschlag
- 35': Führungsfläche
- 37': Vorsprung
- 240: Fallenrampe
- 250: Anschlag
- 260, 260': Anschlag
- 330: Abschnitt
- 332: Abschnitt

- D: Drehung
- A: Achse
- X, Y: Richtung
- B: Achse
- R₁, R₁': Richtung
- R₂, R₂': Richtung
- N: Normalenrichtung
- R₃, R₃': Richtung
- R₄, R₄': Richtung

## Patentansprüche

1. Gargerät, umfassend einen innerhalb eines Gehäuses angeordneten Innenraum mit einer mittels einem Verschlußelement (1) verschließbaren Öffnung, umfassend eine zumindest ein Verriegelungselement (5, 5') umfassende Verriegelungsvorrichtung (3), wobei das Verschlußelement (1) mittels des Verriegelungselements (5, 5') zumindest indirekt an dem Gehäuse festlegbar ist und die Verriegelungsvorrichtung (3) ein Manipulationselement (7) umfasst, das mittels zumindest eines Verbindungselementes (11,11'), das eine Getriebeeinrichtung (16), eine Zahnstange, ein Gestänge und/oder einen Hebel umfasst und zumindest ein translatorisches bewegbares Übertragungselement, welches zumindest eine erste Führungskulisse (19') umfasst, wobei das Verriegelungselement (5') mit zumindest einem in der ersten Führungskulisse (19') geführten ersten Führungszapfen (21') in Wirkverbindung steht, umfasst, derart mit dem Verriegelungselement (5, 5') in Wirkverbindung steht, dass mittels einer Veränderung des Manipulationselementes (7) in Form einer Drehung (D) um eine erste Drehachse (A), die auf das Verriegelungselement (5, 5') übertragen wird, das Verriegelungselement (5, 5') mittels zumindest einer ersten Bewegung aus zumindest einer ersten Stellung in zumindest eine zweite Stellung bewegbar ist und mittels zumindest einer zweiten Bewegung aus der zweiten Stellung in die erste Stellung bewegbar ist, wobei das Verriegelungselement (5, 5') bei der ersten Bewegung translatorisch in eine erste Richtung (R₁, R₁') auf das Gehäuse zu und bei der zweiten Bewegung translatorisch in eine der ersten Richtung (R₁, R₁') entgegengesetzte, zweite Richtung (R₂, R₂') bewegbar ist und das Verschlusselement (1) zumindest eine Offenstellung, in der der Innenraum durch die Öffnung zugänglich ist, zumindest eine Anlüftstellung, in der zumindest eine in dem Innenraum befindliche Atmosphäre entweichen kann, und zumindest eine Geschlossenstellung, in der die Öffnung geschlossen ist, aufweist, wobei sich das Verriegelungselement (5, 5') in der Geschlossenstellung des Verschlusselementes (1) in der ersten Stellung befindet und einen ersten Abstand zu der Öffnung abgewandten Oberfläche (9) des Verschlusselements (1) aufweist und sich das Verriegelungselement (5, 5') in der Anlüftstellung des Verschlusselementes (1) in der zweiten Stellung befindet und einen zweiten Abstand zu der Oberfläche (9) aufweist, wobei der zweite Abstand größer als der erste Abstand ist und/oder die erste Richtung (R₁, R₁') und/oder die zweite Richtung (R₂, R₂') parallel zu einer Normalenrichtung (N) der Oberfläche (9) verläuft.

2. Gargerät nach Anspruch 1, **dadurch gekennzeichnet, dass** das Verriegelungselement (5, 5') in Eingriff mit zumindest einem Eingriffselement, wie einem Fangkloben (17, 17'), bringbar ist, insbesondere das Verriegelungselement (5, 5') zumindest einen Türriegel umfasst und/oder das Eingriffselement, insbesondere der Fangkloben (17, 17'), ortsfest relativ zu dem Gehäuse und/oder der Öffnung angeordnet ist.

3. Gargerät nach Anspruch 1 oder 2, **dadurch gekennzeichnet, dass** in der Offenstellung Garraumatmosphäre zwischen dem Verschlusselement und der Öffnung, insbesondere durch einen Spalt zwischen einerseits zumindest einer Dichtungseinrichtung und andererseits dem Verschlusselement (1) und/oder der Öffnung und/oder zwischen zumindest zwei Dichtungseinrichtungen, entweichen kann, und/oder in der Geschlossenstellung das Verschlusselement (1) zwischen zumindest zwei unterschiedlichen Stellungen bewegbar ist.

4. Gargerät nach Anspruch 3, **dadurch gekennzeichnet, dass** sich das Verriegelungselement (5, 5') in der Offenstellung außerhalb eines Eingriffs mit dem Eingriffselement (17, 17') befindet.

5. Gargerät nach einem der vorangehenden Ansprüche, **dadurch gekennzeichnet, dass** mittels einer dritten Bewegung des Übertragungselements in eine, insbesondere senkrecht zu der ersten Richtung (R₁, R₁') verlaufende, dritte Richtung (R₃, R₃') die erste Bewegung des Verriegelungselementes (5, 5) erzeugbar ist und/oder mittels einer vierten Bewegung des Übertragungselementes (11, 11') in eine der dritten Richtung (R₃, R₃') entgegengesetzte vierte Richtung (R₄, R₄') die zweite Bewegung des Verriegelungselementes (5, 5) erzeugbar ist.

6. Gargerät nach einem der vorangehenden Ansprüche, **dadurch gekennzeichnet, dass** der erste Führungszapfen (21') zumindest eine in der ersten Führungskulisse (19') geführte Rolle (22') umfasst.

7. Gargerät nach einem der vorangehenden Ansprüche, **dadurch gekennzeichnet, dass** das Verriegelungselement (5') drehbar um eine senkrecht zu der ersten Richtung (R₁') und/oder der zweiten Richtung (R₂') verlaufenden zweite Drehachse (B) gelagert ist, wobei vorzugsweise das Verriegelungselement (5'), insbesondere bei einem Übergang aus der Offenstellung in die Anlüftstellung und/oder in der zweiten Stellung, aus einer Eingriffsposition, in der sich das Verriegelungselement (5') insbesondere in Eingriff mit dem Eingriffselement (17') befindet, um die zweite Drehachse (B) drehbar auslenkbar ist.

8. Gargerät nach Anspruch 7, **dadurch gekennzeichnet, dass** eine Drehung des Verriegelungselements (5') um die zweite Drehachse (B) in der ersten Stellung des Verriegelungselements (5'), insbesondere aus der Eingriffsposition, unterbunden ist, insbesondere mittels zumindest eines, vorzugsweise von dem Übertragungselement (11') zumindest bereichsweise umfassten ersten Anschlags (29').

9. Gargerät nach Anspruch 7 oder 8, **dadurch gekennzeichnet, dass** das Verrieglungselement (5') mittels des Übertragungselements (11') aus der Eingriffsposition um die zweite Drehachse (B) drehbar ist.

10. Gargerät nach einem der vorangehenden Ansprüche, **gekennzeichnet durch** zumindest eine Rückstelleinrichtung, mittels der das Verriegelungselement (5') in zumindest eine definierte Drehposition um die zweite Drehachse (B) zwingbar ist.

11. Gargerät nach einem der vorangehenden Ansprüche, **gekennzeichnet durch** zumindest ein Führungselement (13'), wobei das Führungselement ortsfest relativ zu dem Verschlußelement (1) angeordnet ist, das Übertragungselement (11') relativ zu dem Führungselement (13') bewegbar ist, und/oder das Verriegelungselement (5') relativ zu dem Führungselement (13') bewegbar ist, wobei vorzugsweise das Führungselement (13') zumindest eine zweite Führungskulisse (23') aufweist, wobei insbesondere die zweite Führungskulisse (23') sich im wesentlichen entlang der ersten Richtung (R₁') und/oder zweiten Richtung (R₂') erstreckt.

12. Gargerät nach Anspruch 11, **dadurch gekennzeichnet, dass** das Verriegelungselement (5'), vorzugsweise mittels zumindest eines zweiten Führungszapfens in der zweiten Führungskulisse (23') geführt ist.

13. Gargerät nach einem der Ansprüche 11 bis 12, **dadurch gekennzeichnet, dass** die zweite Führungskulisse (323) derartig konturiert ist, dass das Verriegelungselement im wesentlichen frei drehbar um die zweite Drehachse (B) ist, wenn der zweite Führungszapfen (321) zumindest bereichsweise in zumindest einem ersten Abschnitt (330) der zweiten Führungskulisse (323) angeordnet ist und/oder eine Drehung des Verriegelungselementes (305) um die zweite Drehachse (B), insbesondere aus der Eingriffsposition, zumindest bereichsweise begrenzt ist, insbesondere im wesentlichen unterbunden ist, wenn der zweite Führungszapfen (321) zumindest bereichsweise in zumindest einem zweiten Abschnitt (332) der zweiten Führungskulisse angeordnet ist,
wobei optional der zweite Führungszapfen (321) zumindest bereichsweise in dem ersten Abschnitt (330) angeordnet ist, wenn sich das Verriegelungselement (305) in der zweiten Stellung, und/oder der zweite Führungszapfen (321) zumindest bereichsweise in dem zweiten Abschnitt (332) angeordnet ist, wenn sich das Verriegelungselement (305) in der ersten Stellung befindet.

14. Geragerät nach einem der Ansprüche 11 bis 13, **dadurch gekennzeichnet, dass** der zweite Führungszapfen (321) eine derartige Umfangsform aufweist, dass bei zumindest bereichsweiser Anordnung des zweiten Führungszapfens (321) in dem zweiten Abschnitt (332) und Drehung des Verrieglungselementes (305) um die zweite Drehachse (B) zumindest ein Bereich der Oberfläche des zweiten Führungszapfens (321) in Kontakt mit zumindest einem Bereich zumindest einer inneren Oberfläche der zweiten Führungskulisse (323) gelangt und/oder die zweite Führungskulisse (323) im ersten Abschnitt (330) eine größere lichte Weite als im zweiten Abschnitt (332) aufweist.

15. Gargerät nach einem der Ansprüche 8 bis 14, **dadurch gekennzeichnet, dass** das Verriegelungselement (205) über zumindest eine Fallenrampe (240) und/oder über die zweite Führungskulisse derartig mit dem Verbindungselement (211) wechselwirkt, dass eine Bewegung des Verbindungselementes (211) und/oder Übertragungselementes in die vierte Richtung und/oder eine Bewegung des Verriegelungselementes (205) in die zweite Richtung begrenzt ist bzw. sind wenn sich das Verriegelungselement (205) außerhalb zumindest einer ersten Drehposition um die zweite Drehachse (B) befindet,
die Fallenrampe (240) zumindest einen zweiten Anschlag (250) umfasst, wobei das Verriegelungselement (205) zumindest bereichsweise in Kontakt mit dem zweiten Anschlag (250) gelangt, wenn das Verriegelungselement (205) sich außerhalb der ersten Drehposition befindet, und/oder
das Verriegelungselement (205) zumindest einen dritten Anschlag (260) aufweist, wobei der dritte Anschlag (260) vorzugsweise mit dem zweiten Anschlag (250) wechselwirkt, wenn sich das Verriegelungselement (205) außerhalb der ersten Drehposition befindet und/oder mittels des dritte Anschlags (260), insbesondere eine Drehung des Verriegelungselementes (205) aus der ersten Drehposition begrenzbar, vorzugsweise im wesentlichen vollständig unterbindbar, ist, vorzugsweise indem der dritte Anschlag mit zumindest einer Innenkontur der Fallenrampe (240) in Kontakt gelangt.

## Claims

1. A cooking device, comprising an inner chamber arranged inside a housing having an opening which is closable by means of a closure element (1), comprising a locking device (3) comprising at least one locking element (5, 5'), wherein the closure element (1) is at least indirectly fixable to the housing by means of the locking element (5, 5') and the locking device (3) comprises a manipulation element (7) which, by means of at least one connecting element (11,11') comprising a gear apparatus (16), a toothed rack, a linkage and/or a lever and comprises at least one transmission element which is translationally movable and which comprises at least one first guide connecting link (19'), wherein the locking element (5') is in an operative connection with at least one first guide pin (21') guided in the first guide connecting link (19'), is in an operative connection with the locking element (5, 5') in such a manner that by means of a modification of the manipulation element (7) in the form of a rotation (D) about a first axis of rotation (A), which is transmitted to the locking element (5, 5'), the locking element (5, 5') is movable by means of at least one first movement from at least one first position into at least one second position and is movable by means of at least one second movement from the second position into the first position, wherein the locking element (5, 5') is translationally movable during the first movement in a first direction (R₁, R₁') towards the housing and is translationally movable during the second movement in a second direction (R₂, R₂') opposite the first direction (R₁, R₁') and the closure element (1) has at least one open position, in which the inner chamber is accessible through the opening, at least one venting position, in which at least an atmosphere located in the inner chamber can escape, and/or at least one closed position, in which the opening is closed,
wherein the locking element (5, 5') is located in the closed position of the closure element (1) in the first position and is a first distance from the surface (9) of the closure element (1) facing away from the opening and the locking element (5, 5') is located in the venting position of the closure element (1) in the second position and is a second distance from the surface (9), wherein the second distance is greater than the first distance and/or the first direction (R₁, R₁') and/or the second direction (R₂, R₂') run(s) parallel to a normal direction (N) of the surface (9).

2. The cooking device according to Claim 1, **characterized in that** the locking element (5, 5') is able to be brought into engagement with at least one engagement element, such as a latch bolt (17, 17'), in particular the locking element (5, 5') comprises at least one door latch and/or the engagement element, in particular the latch bolt (17, 17'), is arranged in a stationary manner relative to the housing and/or the opening.

3. The cooking device according to Claim 1 or 2, **characterized in that**, in the open position, the cooking chamber atmosphere can escape between the closure element and the opening, in particular through a gap between, on the one hand, at least one sealing apparatus and, on the other hand, the closure element (1) and/or the opening and/or between at least two sealing apparatuses, and/or in the closed position the closure element (1) is movable between at least two different positions.

4. The cooking device according to Claim 3, **characterized in that** the locking element (5, 5') is located in the open position outside an engagement with the engagement element (17, 17').

5. The cooking device according to any one of the preceding claims, **characterized in that** the first movement of the locking element (5, 5) generatable by means of a third movement of the transmission element into a third direction (R₃, R₃') running in particular vertically to the first direction (R₁, R₁'), and/or the second movement of the locking element (5, 5) generatable by means of a fourth movement of the transmission element (11, 11') in a fourth direction (R₄, R₄') opposite the third direction (R₃, R₃').

6. The cooking device according to any one of the preceding claims, **characterized in that** the first guide pin (21') comprises at least one roller (22') guided in the first guide connecting link (19').

7. The cooking device according to any one of the preceding claims, **characterized in that** the locking element (5') is rotatably mounted about a second axis of rotation (B) running vertically to the first direction (R₁') and/or the second direction (R₂'), wherein the locking element (5'), in particular during a transition from the open position into the venting position and/or in the second position, is preferably rotatably deflectable from an engagement position, in which the locking element (5') is in particular in engagement with the engagement element (17'), about the second axis of rotation (B).

8. The cooking device according to Claim 7, **characterized in that** a rotation of the locking element (5') about the second axis of rotation (B) is prevented in the first position of the locking element (5'), in particular from the engagement position, in particular by means of at least one first stop (29') preferably comprised by the transmission element (11') at least in certain areas.

9. The cooking device according to Claim 7 or 8, **characterized in that** the locking element (5') is rotatable by means of the transmission element (11') from the engagement position about the second axis of rotation (B).

10. The cooking device according to any one of the preceding claims, **characterized by** at least one return apparatus, by means of which the locking element (5') is able to be forced into at least one defined rotating position about the second axis of rotation (B).

11. The cooking device according to any one of the preceding claims, **characterized by** at least one guide element (13'), wherein the guide element is arranged in a stationary manner relative to the closure element (1), the transmission element (11') is movable relative to the guide element (13'), and/or the locking element (5') is movable relative to the guide element (13'), wherein the guide element (13') preferably has at least one second guide connecting link (23'), wherein in particular the second guide connecting link (23') substantially extends along the first direction (R₁') and/or second direction (R₂').

12. The cooking device according to Claim 11, **characterized in that** the locking element (5') is preferably guided by means of at least one second guide pin in the second guide connecting link (23').

13. The cooking device according to any one of Claims 11 to 12, **characterized in that** the second guide connecting link (323) is contoured in such a manner that the locking element is substantially freely rotatable about the second axis of rotation (B), if the second guide pin (321) is arranged at least in certain areas in at least one first portion (330) of the second guide connecting link (323) and/or a rotation of the locking element (305) about the second axis of rotation (B), in particular from the engagement position, is limited at least in certain areas, in particular is substantially prevented, if the second guide pin (321) is arranged at least in certain areas in at least one second portion (332) of the second guide connecting link, wherein the second guide pin (321) is optionally arranged at least in certain areas in the first portion (330), if the locking element (305) is arranged in the second position, and/or the second guide pin (321) is arranged at least in certain areas in the second portion (332), if the locking element (305) is located in the first position.

14. The cooking device according to any one of Claims 11 to 13, **characterized in that** the second guide pin (321) has such a circumferential form that, in the event of the second guide pin (321) being arranged at least in certain areas in the second portion (332) and in the event of the locking element (305) rotating about the second axis of rotation (B), at least one region of the surface of the second guide pin (321) enters into contact with at least one region of at least one inner surface of the second guide connecting link (323) and/or the second guide connecting link (323) has a greater clearance in the first portion (330) than in the second portion (332).

15. The cooking device according to any one of Claims 8 to 14, **characterized in that** the locking element (205) interacts with the connecting element (211) via at least one falling ramp (240) and/or via the second guide connecting link in such a manner that a movement of the connecting element (211) and/or transmission element in the fourth direction and/or a movement of the locking element (205) in the second direction is or are limited, if the locking element (205) is located outside at least one first rotating position about the second axis of rotation (B),
the falling ramp (240) comprises at least one second stop (250), wherein the locking element (205) enters into contact with the second stop (250) at least in certain areas, if the locking element (205) is located outside the first rotating position, and/or
the locking element (205) has at least one third stop (260), wherein the third stop (260) preferably interacts with the second stop (250), if the locking element (205) is located outside the first rotating position and/or in particular a rotation of the locking element (205) from the first rotating position is able to be limited, preferably is substantially completely preventable, by means of the third stop (260), preferably by the third stop entering into contact with at least one inner contour of the falling ramp (240).

## Revendications

1. Appareil de cuisson, comprenant un espace intérieur contenu dans une enceinte avec une ouverture refermable au moyen d'un élément de fermeture (1), comprenant un dispositif de verrouillage (3) comportant au moins un élément de verrouillage (5, 5'), l'élément de fermeture (1) pouvant être fixé au moins indirectement sur l'enceinte au moyen de l'élément de verrouillage (5, 5'), et le dispositif de verrouillage (3) comportant un élément de manipulation (7), lequel est en liaison d'actionnement avec l'élément de verrouillage (5, 5') au moyen d'au moins un élément de connexion (11,11') comprenant un dispositif de transmission (16), une crémaillère, une tringle et/ou un levier et au moins un élément de transmission déplaçable par translation, lequel comprend au moins une première coulisse de guidage (19'), l'élément de verrouillage (5') étant en liaison d'actionnement avec au moins un premier tourillon de guidage (21') guidé dans la première coulisse de guidage (19'), de telle manière que par un ajustement de l'élément de manipulation (7) prenant la forme d'une rotation (D) autour d'un premier axe de rotation (A), transmise à l'élément de verrouillage (5, 5'), l'élément de verrouillage (5, 5') est déplaçable par au moins un premier mouvement depuis au moins une première position vers au moins une deuxième position, et par au moins un deuxième mouvement depuis la deuxième position vers la première position, l'élément de verrouillage (5, 5') étant lors du premier déplacement déplaçable par translation dans une première direction (R₁, R₁') vers l'enceinte, et lors du deuxième déplacement déplaçable par translation dans une deuxième direction (R₂, R₂') opposée à la première direction (R₁, R₁'), et l'élément de fermeture (1) présentant au moins une position d'ouverture, où l'espace intérieur est accessible par l'ouverture, au moins une position d'aération, où au moins une atmosphère présente dans l'espace intérieur peut être évacuée, et au moins une position de fermeture, où l'ouverture est fermée, l'élément de verrouillage (5, 5') se trouvant en première position en position de fermeture de l'élément de fermeture (1), et présentant un premier espacement à la surface (9) de l'élément de fermeture (1) distante de l'ouverture, et l'élément de verrouillage (5, 5') se trouvant en deuxième position en position d'aération de l'élément de fermeture (1), et présentant un deuxième espacement à la surface (9), ledit deuxième espacement étant supérieur au premier espacement et/ou la première direction (R₁, R₁') et/ou la deuxième direction (R₂, R₂') s'étendant parallèlement à une direction de normale (N) à la surface (9).

2. Appareil de cuisson selon la revendication 1, **caractérisé en ce que** l'élément de verrouillage (5, 5') est en prise avec au moins un élément d'engagement, tel qu'un gond de maintien (17, 17'), en particulier **en ce que** l'élément de verrouillage (5, 5') comprend au moins un verrou et/ou **en ce que** l'élément d'engagement, en particulier le gond de maintien (17, 17'), est disposé fixement par rapport à l'enceinte et/ou à l'ouverture.

3. Appareil de cuisson selon la revendication 1 ou la revendication 2, **caractérisé en ce qu'**en position d'ouverture, l'atmosphère de l'enceinte de cuisson peut s'échapper entre l'élément de fermeture et l'ouverture, en particulier par une fente entre au moins un dispositif d'étanchéité, d'une part, et l'élément de fermeture (1) et/ou l'ouverture et/ou entre au moins deux dispositifs d'étanchéité, et/ou **en ce qu'**en position de fermeture, l'élément de fermeture (1) est déplaçable entre au moins deux positions différentes.

4. Appareil de cuisson selon la revendication 3, **caractérisé en ce qu'**en position d'ouverture, l'élément de verrouillage (5, 5') se trouve en dehors d'une prise avec l'élément d'engagement (17, 17').

5. Appareil de cuisson selon l'une des revendications précédentes, **caractérisé en ce que** le premier déplacement de l'élément de verrouillage (5, 5) peut être généré par un troisième déplacement de l'élément de transmission dans une troisième direction (R₃, R₃'), s'étendant en particulier perpendiculairement à la première direction (R₁, R₁'), et/ou **en ce que** le deuxième déplacement de l'élément de verrouillage (5, 5) peut être généré par un quatrième déplacement de l'élément de transmission (11, 11') dans une quatrième direction (R₄, R₄') opposée à la troisième direction (R₃, R₃').

6. Appareil de cuisson selon l'une des revendications précédentes, **caractérisé en ce que** le premier tourillon de guidage (21') comporte au moins une roulette (22') guidée dans la première coulisse de guidage (19').

7. Appareil de cuisson selon l'une des revendications précédentes, **caractérisé en ce que** l'élément de verrouillage (5') est monté de manière pivotante autour d'un deuxième axe de rotation (B) s'étendant perpendiculairement à la première direction (R₁') et/ou à la deuxième direction (R₂'), l'élément de verrouillage (5') pouvant préférentiellement être dégagé par pivotement autour du deuxième axe de rotation (B) d'une position d'engagement, où l'élément de verrouillage (5') se trouve notamment en prise avec l'élément d'engagement (17'), en particulier lors d'un passage de la position d'ouverture à la position d'aération et/ou en deuxième position.

8. Appareil de cuisson selon la revendication 7, **caractérisé en ce qu'**une rotation de l'élément de verrouillage (5') autour du deuxième axe de rotation (B) en première position de l'élément de verrouillage (5'), en particulier à partir de la position d'engagement, est empêchée, en particulier au moyen d'au moins une première butée (29'), préférentiellement au moins partiellement couverte par l'élément de transmission (11').

9. Appareil de cuisson selon la revendication 7 ou la revendication 8, **caractérisé en ce que** l'élément de verrouillage (5') au moyen de l'élément de transmission (11') est pivotant autour du deuxième axe de rotation (B) hors de la position d'engagement.

10. Appareil de cuisson selon l'une des revendications précédentes, **caractérisé par** au moins un dispositif de rappel, au moyen duquel l'élément de verrouillage (5') peut être contraint vers au moins une position de pivotement définie autour du deuxième axe de rotation (B).

11. Appareil de cuisson selon l'une des revendications précédentes, **caractérisé par** au moins un élément de guidage (13'), ledit élément de guidage étant disposé fixement par rapport à l'élément de fermeture (1), l'élément de transmission (11') étant déplaçable par rapport à l'élément de guidage (13'), et/ou l'élément de verrouillage (5') étant déplaçable par rapport à l'élément de guidage (13'), l'élément de guidage (13') présentant préférentiellement au moins une deuxième coulisse de guidage (23'), ladite deuxième coulisse de guidage (23') s'étendant en particulier sensiblement dans la première direction (R₁') et/ou dans la deuxième direction (R₂').

12. Appareil de cuisson selon la revendication 11, **caractérisé en ce que** l'élément de verrouillage (5') est guidé dans la deuxième coulisse de guidage (23'), préférentiellement au moyen d'au moins un deuxième tourillon de guidage.

13. Appareil de cuisson selon la revendication 11 ou la revendication 12, **caractérisé en ce que** la deuxième coulisse de guidage (323) présente un contour tel que l'élément de verrouillage est sensiblement librement pivotant autour du deuxième axe de rotation (B) lorsque le deuxième tourillon de guidage (321) est disposé au moins partiellement dans au moins un premier tronçon (330) de la deuxième coulisse de guidage (323) et/ou **en ce qu'**un pivotement de l'élément de verrouillage (305) autour du deuxième axe de rotation (B), en particulier à partir de la position d'engagement, est au moins partiellement limité, en particulier sensiblement empêché, lorsque le deuxième tourillon de guidage (321) est au moins partiellement disposé dans au moins un deuxième tronçon (332) de la deuxième coulisse de guidage,
le deuxième tourillon de guidage (321) étant facultativement disposé au moins partiellement dans le premier tronçon (330) lorsque l'élément de verrouillage (305) se trouve en deuxième position, et/ou le deuxième tourillon de guidage (321) étant disposé au moins partiellement dans le deuxième tronçon (332), lorsque l'élément de verrouillage (305) se trouve en première position.

14. Appareil de cuisson selon l'une des revendications 11 à 13, **caractérisé en ce que** le deuxième tourillon de guidage (321) présente une forme périphérique telle qu'en cas de disposition au moins partielle du deuxième tourillon de guidage (321) dans le deuxième tronçon (332), et de pivotement de l'élément de verrouillage (305) autour du deuxième axe de rotation (B), au moins une partie de la surface du deuxième tourillon de guidage (321) entre en contact avec au moins partie d'au moins une surface intérieure de la deuxième coulisse de guidage (323) et/ou la deuxième coulisse de guidage (323) présente dans le premier tronçon (330) une largeur intérieure supérieure à celle dans le deuxième tronçon (332).

15. Appareil de cuisson selon l'une des revendications 8 à 14, **caractérisé en ce que** l'élément de verrouillage (205) interagit avec l'élément de connexion (211) au moyen d'au moins une rampe (240) et/ou de la deuxième coulisse de guidage, de manière à limiter un déplacement de l'élément de connexion (211) et/ou de l'élément de transmission dans la quatrième direction et/ou un déplacement de l'élément de verrouillage (205) dans la deuxième direction lorsque l'élément de verrouillage (205) se trouve en dehors d'au moins une première position de pivotement autour du deuxième axe de rotation (B),
la rampe (240) présente au moins une deuxième butée (250), l'élément de verrouillage (205) entrant au moins partiellement en contact avec la deuxième butée (250) lorsque l'élément de verrouillage (205) se trouve en dehors de la première position de pivotement, et/ou l'élément de verrouillage (205) présente au moins une troisième butée (260), ladite troisième butée (260) interagissant préférentiellement avec la deuxième butée (250) lorsque l'élément de verrouillage (205) se trouve en dehors de la première position de pivotement et/ou en particulier une rotation de l'élément de verrouillage (205) hors de la position de pivotement peut être limitée, préférentiellement sensiblement totalement empêchée au moyen de la troisième butée (260), préférentiellement par entrée en contact de la troisième butée avec au moins un contour intérieur de la rampe (240).
